# EUROPEAN PATENT SPECIFICATION

(11) **EP 3 022 471 B1**
(45) Date of publication and mention of the grant of the patent: **06.09.2017**
(21) Application number: 14748362.2
(22) Date of filing: 15.07.2014
(51) Int. Cl.: F16K 3/24, F16K 27/02

(54) **AXIAL FLUID VALVES**
AXIALE FLÜSSIGKEITSVENTILE
VANNES AXIALES POUR FLUIDE

(30) Priority: 15.07.2013 US 201313942118
(43) Date of publication of application: 25.05.2016
(73) Proprietor: Fisher Controls International LLC, Marshalltown, IA 50158 (US)
(72) Inventor: HOFF, Elliot James, Ames, IA 50014 (US); SCHADE, Ross Arthur, Ames, IA 50010 (US); KENNEY, Andrea Leigh, Iowa City, IA 52245 (US); TIBBEN, Bradley Steve, Nevada, IA 50201 (US)
(74) Representative: Cabinet Laurent & Charras
(86) International application number: PCT/US2014/046654
(87) International publication number: WO 2015/009698

(56) References cited:
- WO-A2-2007/048942
- FR-A- 598 350
- GB-A- 346 332
- JP-A- 2006 083 941
- NL-C- 13 901
- US-A- 2 507 851
- US-A- 6 003 551
- US-A1- 2009 205 729

## Description

### FIELD OF THE DISCLOSURE

The present disclosure relates generally to axial fluid valves and, more specifically, to axial fluid valves having curved or angled valve bodies.

### BACKGROUND

Fluid control valves (e.g., sliding stem valves, globe valves, rotary valves, butterfly valves, ball valves, etc.) are used in process control systems to control the flow of process fluids and typically include an actuator (e.g., rotary actuator, linear actuator, etc.) to automate operation of the valve. Some of these fluid control valves, although effective in many applications, involve tradeoffs. For example, butterfly valves may be used to control large flow volumes in an efficient manner, but are only capable of modest accuracy, and the seals therein are often limited in life cycle and temperature range. Globe valves, on the other hand, typically provide extremely rigid trim and precise control, but often provide lower flow capacity for a given line size.

In line or axial fluid control valves are an alternative to the above-mentioned fluid control valves. One benefit of axial valves is that they incorporate globe valve style trim and, thus, the advantages offered thereby. Additionally, in axial valves, this trim may be oriented relative to the fluid flow path to increase efficiency and reduce energy losses due to noise and turbulence. Some known axial valves include an actuator mounted to an exterior surface of the valve body and positioned so the output shaft (e.g., stem, spindle, etc.) of the actuator, or a portion thereof, is oriented substantially perpendicular to the fluid flow path of the valve. The output shaft of the actuator is commonly connected to a flow control member (e.g., a plug) within the valve body via a transmission or other actuation conversion components such as, for example, a rack-on-rack assembly, a rack-and-pinion assembly or similar gear assembly. The actuator moves the flow control member within the valve body relative to a seat ring (e.g., a valve seat) between an open position and a closed position to allow or prevent the flow of fluid through the valve. Therefore, many known axial fluid valves exhibit problems with actuation and sealing (e.g., gaskets, packing, seal rings) because these known axial fluid valves often utilize actuators and transmissions within the fluid flow path and, as a result, require a large number of seals and gaskets to protect the gears and other actuation components from pressurized process fluid.

Additionally, in these known axial fluid valves, a bore or channel is often formed in the valve body to allow the actuation components to connect to the flow control member within the fluid flow path. Therefore, the fluid flow path is diverted around the bore or channel that houses the actuation conversion components. These diversions and obstructions in the fluid flow path create turbulence and, as a result, decrease the flow efficiency of the valve. Further, operating axial fluid valves with such a large number of moving parts requiring numerous seals greatly increases the possibility of leakage of fluid outside the valve body and increases manufacturing and maintenance costs. For instance, a fluid valve having such drawbacks is disclosed in document GB346332A.

Figure 1 of US 2,507,851 discloses an apparatus according to the preample of claim 1.

### SUMMARY

The invention is defined by an apparatus according to claim 1.

### BRIEF DESCRIPTION OF THE DRAWINGS

FIG. 1A illustrates a cross-sectional view of an example axial fluid control valve in a first (open) position in accordance with the teachings of this disclosure.
FIG. 1B illustrates a cross-sectional view of the example axial fluid control valve of FIG. 1A in a second (closed) position.
FIC. 1C illustrates a partially cross-sectioned view of the example axial fluid control valve of FIGS. 1A and 1B.
FIG. 1D illustrates a partially cross-sectioned view of the example fluid control valve of FIGS. 1A-1C having an offset inlet and outlet.
FIG. 2 illustrates a partially cross-sectioned view of the example axial fluid control valve of FIGS. 1A-C with a position sensor.
FIG. 3 illustrates a partially cross-sectioned view of the example axial fluid control valve of FIGS. 1A-C having a hand wheel operated actuator.

### DETAILED DESCRIPTION

Certain examples are shown in the above-identified figures and described in detail below. In describing these examples, like or identical reference numbers are used to identify the same or similar elements. The figures are not necessarily to scale and certain features and certain views of the figures may be shown exaggerated in scale or in schematic for clarity and/or conciseness. Additionally, several examples have been described throughout this specification. Any features from any example may be included with, a replacement for, or otherwise combined with other features from other examples.

The example axial fluid valves described herein reduce valve noise and cavitation, provide a relatively unobstructed passageway to reduce turbulent fluid flow and improve flow capacity, significantly eliminate in-flow actuating components, which require numerous seals and gaskets, significantly eliminate the structures (e.g., channels, bores) that accommodate such components, and increase overall flow efficiency. In general, the example axial fluid valves described herein include a curved or angled valve body that diverts the flow of fluid between the inlet and the outlet to a portion of the valve body containing a flow control member that moves in a direction substantially aligned with the flow of fluid. More specifically, the axial fluid valves described herein enable the use of globe valve style trim (e.g., a plug and seat ring) oriented substantially in line with a portion of the passageway and, thus, the fluid flow path. The valve bodies of the example axial fluid valves define a passageway with less curvature and/or sharp angles than a traditional globe valve or sliding stem valve while still maintaining linear actuation in the direction of the fluid flow path, which reduces turbulence in the valve. The example axial valves provide a more streamlined flow path.

In some examples, the flow control member (e.g., a plug, a valve plug) is operatively coupled to an actuator (e.g., a pneumatic actuator, a hydraulic actuator, an electric actuator) via a valve stem. The valve body is curved or angled in a manner that allows the actuator to move the plug linearly within a portion of the passageway without the use of additional actuation or conversion components. Thus, the shape of the valve body reduces the number of actuation components, outside and inside of the valve, while maintaining a relatively linear and smooth fluid flow path.

More specifically, an example axial fluid valve described herein includes a first valve body portion having an inlet and an outlet and a second valve body portion having and inlet and an outlet. The outlet of the first valve body portion is coupled to the inlet of the second valve body portion. When coupled together, the first and second valve body portions define a passageway between the inlet of the first valve body portion and the outlet of the second valve body portion. A flow control member is slidably received within the first valve body portion near the outlet of the first valve body portion and is to engage a valve seat (e.g., a seat ring) to prevent or allow the flow of fluid through the valve.

In an example valve disclosed herein, the inlet of the first valve body portion is aligned along a first axis and the outlet of the second valve body portion is aligned along a second axis which, in some examples, is substantially aligned with the first axis such that the inlet and the outlet are coaxial. The first valve body portion includes a first curved or angled portion that directs the flow of fluid from the first axis at the inlet to a third axis at the outlet of the first valve body portion adjacent the valve seat. In some examples, the third axis is parallel to and offset from the first and/or second axes. By including the first curved portion, the example valve body enables the actuator to have sufficient space and position to move the flow control member linearly in the passageway with fewer actuation/conversion components than traditional in line axial fluid valves.

In other words, the passageway of example valve directs the flow of fluid through the inlet of the first valve body portion in a first direction along the first axis, through the first curved portion, and then redirects the flow of fluid at the flow control member in a third direction along the third axis. Therefore, the curved portion of the first valve body portion directs the flow of fluid away from the first axis and then redirects the flow of fluid along a direction substantially the same as the first direction along the third axis. In some examples, the second valve body portion receives the process fluid flow from the outlet of the first body portion along the third axis, directs the process fluid through a second curved or angled portion away from the third axis, and then redirects the fluid to a second direction along the second axis at the outlet. In some examples, the first, second and third directions are substantially the same. In other examples, the outlet of the second valve body portion may be aligned along other axes.

In some examples, the axial fluid valve includes a sensor to measure the location of the valve stem in relation to the valve body. The sensor provides a feedback signal to the actuator to communicate the location of the valve stem (and thus the flow control member) more accurately. In some examples, a hand wheel is utilized for manual operation of the valve.

The examples described herein enable the passageway of the fluid flow path to remain relatively smooth and linear while significantly reducing or eliminating actuation components outside and within the fluid flow path, thereby increasing fluid flow efficiency. With fewer actuation components, the example axial fluid valves simplify manufacturing and machining requirements and, thus, decrease the cost of manufacturing an axial fluid valve. Further, the example axial fluid valve described herein reduces leakage caused by seal failures because the actuator(s) may be disposed outside the fluid stream. Furthermore, by having fewer moving parts, the example axial fluid valves described herein greatly reduce the possibility of mechanical failure and leakage during operations.

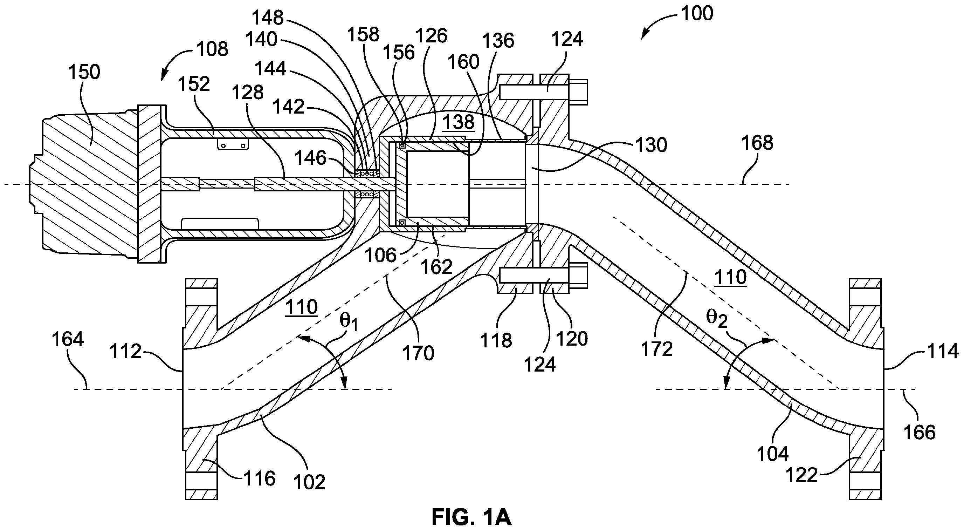

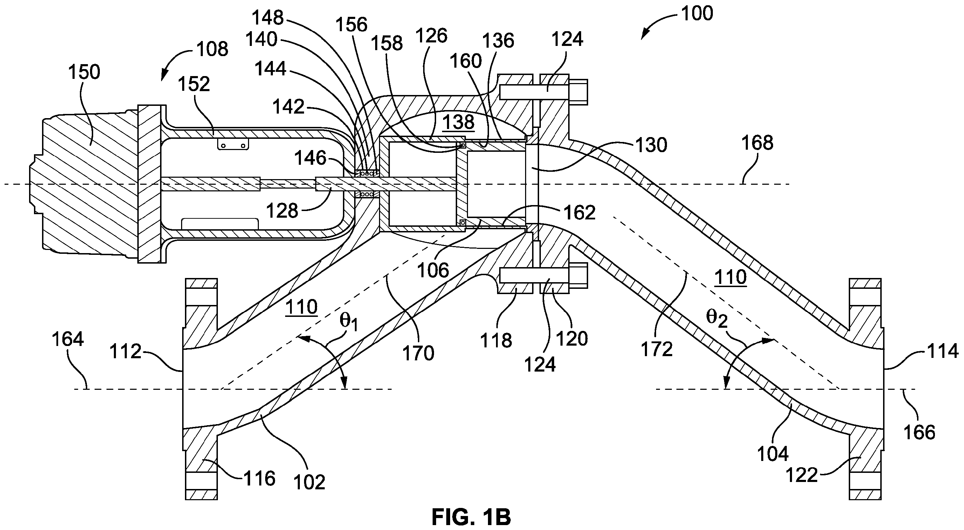

Turning to the figures, FIGS. 1A and 1B illustrate cross-sectional views of an example axial fluid control valve 100 described herein. The valve 100 includes a first valve body portion 102, a second valve body portion 104, a flow control member 106 (e.g., a plug) and an actuator 108. The valve body portions 102 and 104 are coupled to define a passageway 110 that provides a fluid flow path (e.g., a curved flow path, a U-shaped flow path, an angled flow path, etc.) between an inlet 112 and an outlet 114 when the axial fluid control valve 100 is installed in a fluid process system (e.g., a distribution piping system). In some examples, the first valve body portion 102 and the second valve body portion 104 may be integrally formed to define the axial fluid control valve 100 as a substantially unitary piece or structure.

In the example shown, the first valve body portion 102 includes a first flange 116 at the inlet 112 and a second flange 118 removably coupled to a third flange 120 of the second valve body portion 104. In some examples, the portion of the first valve body 102 adjacent the second flange 118 is considered an outlet for the first valve body portion 102 and the portion of the second valve body portion 104 adjacent the third flange 120 is considered in inlet for the second valve body portion 104. The second valve body portion 104 also includes a fourth flange 122 at the outlet 114. The second flange 118 of the first valve body portion 102 and the third flange 120 of the second valve body portion 104 are coupled via flange fasteners 124 (e.g., bolts). In other examples, the second flange 118 and the third flange 120 may be removably coupled with any other suitable fastening mechanism(s). In operation, the first flange 116 of the first valve body portion 102 may be coupled to an upstream pipe (e.g., an upstream supply source) and the fourth flange 122 of the second valve body portion 104 may be coupled to a downstream pipe (e.g., a downstream supply source). Although the inlet 112 and the outlet 114 are referred to, respectively, as the inlet and the outlet of the valve 100, in other examples, the inlet and the outlet may be reversed, such that the outlet 114 is the inlet of the valve 100 and the inlet 112 is the outlet of the valve 100.

In the example shown in FIG. 1A, the valve 100 is in a first (e.g., open) position and in the example shown in FIG. 1B, the valve 100 is in a second (e.g., closed) position. The valve 100 is to be interposed in a fluid flow path between an upstream supply source and a downstream supply source to control the flow of process fluid, which may include any industrial fluid related applications such as, for example, fossil fuel production, refining, and gas transmission. In operation, the plug 106 operates between the first position to allow the flow of fluid between the inlet 112 and the outlet 114 (FIG. 1A) and the second position to prevent the flow of fluid between the inlet 112 and the outlet 114 (FIG. 1B).

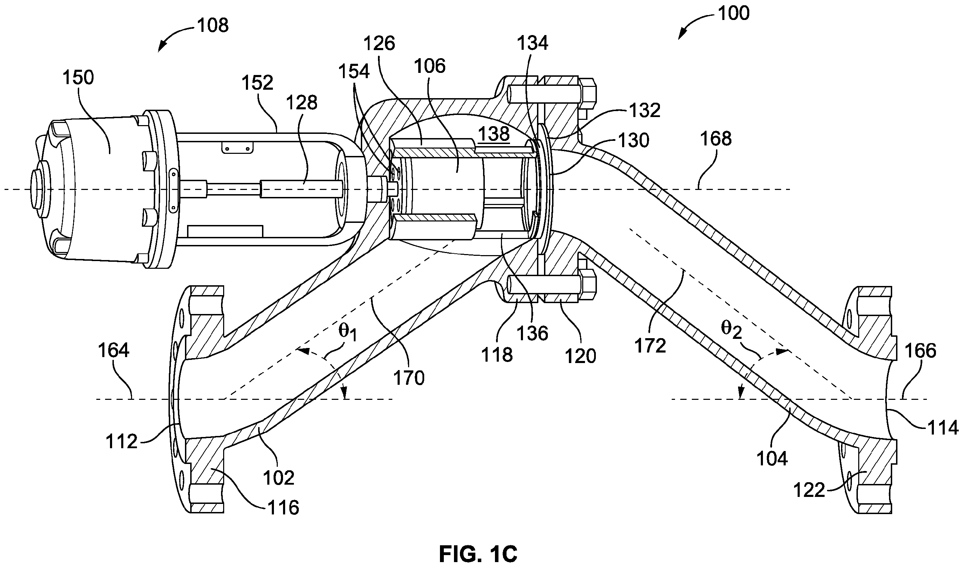

FIG. 1C illustrates a partially cross-sectioned view of the example valve 100. As shown in FIGS. 1A, 1B and 1C, the plug 106 is slidably disposed within a cage 126 and moves between the open position (FIGS. 1A and 1C) and the closed position (FIG. 1B) to control the fluid flow through the valve 100. A stem 128 (e.g., a valve stem, a plug stem) couples the plug 106 to the actuator 108, which operates to move the plug 106 toward and away from a valve seat 130 (e.g., a seat ring, a flow control aperture). The cage 126 is coupled to an inner surface of the first valve body portion 102 and may be attached using any suitable fastening mechanism(s). In some examples, the cage 126 may be clamped or pinched between a section of the first valve body portion 102 and another component of the valve 100.

As shown more clearly in FIG. 1C, the valve seat 130 includes a flange portion 132 and a seat portion 134. In the example shown, the flange portion 132 of the valve seat 130 is coupled (e.g., clamped, pinched) between the first and second valve body portions 102, 104 and, more specifically, between the second flange 118 and the third flange 120. In other examples, the valve seat 130 may be attached to the valve 100 using other suitable attachment devices (e.g., threads, bolts, etc.). In the example shown, the seat portion 134 extends into the passageway 110 such that the plug 106 may engage the seat portion 134 to prevent the flow of fluid through the valve 100, as described further detail below.

In the example shown, the cage 126 includes at least one opening 136 through which fluid can flow when the fluid valve 100 is in the open position (i.e., when the plug 106 is spaced away from the valve seat 130). The cage 126 may be configured in different manners (e.g., the openings 136 having various shapes, sizes or spacing) to provide particular, desirable fluid flow characteristics such as, for example, to control the flow, reduce noise and/or cavitation, to enhance pressure reductions of the process fluid, etc.

In the example shown, the cage 126 is disposed within a cavity 138 formed in the first valve body portion 102. Part of the cavity 138 is defined by a wall section 140 of the first valve body portion 102. In the example shown, the stem 128 extends through an aperture 142 in the wall section 140 of first valve body portion 102. The aperture 142 includes a packing 144 to maintain a seal between the passageway 110 and the outside of the valve 100 and enables a smooth, linear movement of the plug stem 128. The packing 144 is secured by gland nuts or retainers 146, 148, which may compress the packing 144 to form a fluid-tight seal and prevent leakage of process fluid from the passageway 110 to the outside of the valve 100.

In the example shown, the actuator 108 includes a drive mechanism 150 and a mounting/alignment support 152. The support 152 may be coupled to the wall section 140 of the first valve body portion using any suitable mechanical fasteners, adhesives, etc. In the example shown, the actuator 108 is a linear actuator. However, in other examples, the example valve 100 may accommodate different types of actuators such as, for example, rotary actuators. The actuator 108 may be any type of actuator such as, for example, a hydraulic actuator, an electric actuator, a mechanical actuator, an electro-mechanical actuator, a piezoelectroic actuator or any other suitable actuator.

As more clearly shown in FIG. 1C, the plug 106 includes channels or conduits 154 to balance or equalize the forces exerted across the plug 106 by the pressures of the process fluid acting on the plug 106. As a result, a smaller actuating force (e.g., via the actuator 108) may be provided to move the plug 106 between the open and closed positions. In other examples, the plug 130 may contain more or fewer channels to balance the pressure behind the plug 106 in the cage 126. In still other examples, the plug 106 may be any other flow control member such as an unbalanced plug (e.g., a plug having no channels or conduits).

In the example shown, the plug 106 also includes a recessed portion 156 to receive a plug seal assembly 158 (e.g., a seal, a seal and an anti-extrusion ring, etc.). The plug seal assembly 158 engages an inner surface 160 of the cage 126 to prevent fluid from leaking between the cage 126 and an outer surface 162 of the plug 106. In some examples, the plug seal assembly 158 also ensures a relatively smooth and linear translation of the plug 106 within the cage 126.

In the example shown in FIGS. 1A-1C, the passageway 110 at the inlet 112 of the valve 100 adjacent the first flange 116 is aligned (e.g., axially) along a first axis 164, and the passageway 110 at the outlet 114 of the valve 100 adjacent the fourth flange 122 is aligned along a second axis 166. In the example shown, the first axis 164 and the second axis 166 are substantially the same (i.e., the inlet 112 and the outlet 114 are coaxial). In other examples, the first and second axes 164, 166 may be parallel but offset (e.g., distanced or spaced apart from one another, non-coaxial), which may depend on the orientation and location of the upstream supply pipe and the downstream supply pipe. In some examples, the first and/or second axes 164, 166 are substantially horizontal such as, for example, when the upstream and downstream supply pipes are horizontally aligned relative to the ground.

In the example shown, a portion of the passageway 110 adjacent the valve seat 130 is substantially aligned along a third axis 168. The third axis 168 is substantially parallel to and offset from the first and second axes 164, 166. In the example shown, a longitudinal axis of the stem 128 is also aligned along the third axis 168. In some examples, the aperture 142 and/or a longitudinal axis of the cage 126 are also substantially aligned along the third axis 168. In operation, the actuator 108 moves the plug 106, via the stem 128, along the third axis 168 within the passageway 110 of the valve 100. More specifically, the plug 106 is moved in away from the valve seat 130 (FIG. 1A) to allow or increase the flow of fluid through the valve 100 and toward the valve seat 130 (FIG. 1B) to restrict or prevent the flow of fluid through the valve 100. The portion of the passageway 106 adjacent the valve seat is substantially aligned along the third axis 168 and, thus, the direction of fluid flow through this portion is also aligned along the third axis 168.

In the example shown, fluid entering the inlet 112 flows in a first direction substantially aligned along the first axis 164 and fluid exiting at the valve 100 at the outlet 114 flows in a second direction substantially aligned along the second axis 166. In some examples, the first direction and the second direction are substantially the same (e.g., right, east, etc.). In some such examples, the first and second axes 164, 166 may be substantially the same (e.g., coaxial) or parallel to but offset from one another. In some examples, the valve 100 is interposed between an upstream supply pipe and a downstream supply pipe having the same axis and, thus, the first and second axes 164, 166 are substantially the same.

In the example shown, fluid moving through the valve seat 130 between the first and second body portions 102, 104 flows in a third direction substantially aligned along the third axis 168. In some examples, the third direction is the substantially the same as the first and/or second directions (e.g., right, east, etc.). In other words, in some examples, the fluid flow path at the inlet 112 is flowing in the first direction and the fluid flow path at outlet 114 is flowing the second direction substantially the same as the first direction, and the fluid flow path at the valve seat 130 (e.g., where the plug 106 allows or prevents fluid flow) is flowing in the third direction substantially the same as the first and second directions. The example valve 100 diverts the flow of fluid from the first direction at inlet 112 along the first axis 164, to the third direction at the valve seat 130 along the third axis 168 and then to the second direction at the outlet 114 along the second axis 166. Therefore, in some examples, a central axis (e.g., from the inlet 112 to the outlet 114) of the entire flow passage is non-linear.

In the example shown, the wall section 140 to which the actuator 108 is coupled is substantially perpendicular to the third axis 168. However, in other examples, the outside surface of the first valve body portion 102 may not include a perpendicular wall section for mounting the actuator 108. In such examples, the actuator 108 may be coupled to an angled or curved section of the first valve body portion 102.

In the example shown, a first curved or angled portion (e.g., a part, a section, a segment, etc.) of the first valve body portion 102 is curved or angled to direct the fluid flow path along a fourth axis 170 between the first axis 164 at the inlet 112 and the third axis 168 at the valve seat 130 (i.e., the outlet of the first valve body portion 102). In the example shown, the first curved or angled portion of the first valve body portion 102, aligned along the fourth axis 170, is substantially linear. However, in other examples, the first valve body portion 102 may not include a linear portion but may be a continuous curve (e.g., a smooth curve, an S-shaped curve, an arcuate shape). As illustrated, a first angle θ₁ is formed between the first axis 164 and the fourth axis 170. In some examples, the first angle θ₁ may be any angle between 0° and 90°.

In the example shown, a second curved or angled portion of the second valve body portion 104 is curved or angled to direct the fluid flow path along a fifth axis 172 between the third axis 168 at the valve seat 130 (i.e., the inlet of the second valve body portion 104) and the second axis 166 at the outlet 114. In the example shown, the second curved or angled portion of the second valve body portion 106, aligned along the fifth axis 172, is substantially linear. In other examples, the second valve body portion 106 may not include a linear portion but may be a continuous curve (e.g., a smooth curve, an S-shaped curve, etc.). A second angle θ₂ is formed between the fifth axis 172 and the second axis 166. In some examples, the second angle θ₂ may be any angle between 0° and 90°. The first and second angles θ₁ and θ₂ may be substantially the same or different depending on the design parameters or specifications of the fluid processing system. In the example shown, the diameter of the passageway 110 in the second valve body portion 106 is substantially constant. However, in other examples, the diameter of the passageway 110 in the second valve body portion 104 is varied.

In operation, process fluid provided by an upstream supply pipe enters the valve 100 at the inlet 112. Fluid entering the first valve body portion 102 at the inlet 112 (e.g., through a first portion of the passageway 110) flows in the first direction and is substantially aligned along the first axis 164. The flow of fluid changes direction (e.g., formed by the first angle θ₁) and flows along the fourth axis 170 in the first valve body portion 102. As the fluid approaches the cage 126, the plug 106 and the valve seat 130 (e.g., in a third portion of the passageway 110), the first valve body portion 102 curves to change the flow of fluid to the third direction along the third axis 168. When the valve 100 is in the first (open) position, fluid flows through the openings 136 in the cage and through the valve seat 130 between the first and second valve body portions 102, 104. In some examples, the valve seat 130 lies in a plane that is oriented substantially perpendicular to the first, second and/or third axes 164, 166, 168.

After the fluid flows through the valve seat 130, the fluid changes direction (e.g., formed by the second angle θ₂) and flows along the fifth axis 172 in the second valve body portion 104. As the fluid approaches the outlet 114 (e.g., through a second portion of the passageway 110), the fluid flow path curves to change the flow of fluid to the second direction, which is substantially aligned along the second axis 166. In some examples, the third axis 168 is parallel to and offset from the first and/or second axes 164, 166. In some examples, the first, second and/or third directions are substantially the same.

In the example shown, the linear actuator 108 is oriented along the third axis 168 that is substantially parallel to but offset (i.e., non-coaxial) relative to the first and second axes 164, 166. The stem 128 moves the plug 106 linearly along the third axis 168 (e.g., in the third direction). Thus, the trim assembly (e.g., the plug 106 and the valve seat 130) is oriented and moves substantially linearly relative to the portion of the passageway 110 along the third axis 168. This linear orientation and motion improves flow efficiency and reduces valve noise and turbulence. In the example shown, the shape and curve of the first valve body portion 102 enable the actuator 108 to move the stem 128 and the plug 106 linearly along the third axis 168 with few, if any, actuation conversion components (e.g., a transmission, a linkage assembly, etc). The stem 128 may be coupled directly to the drive device 150 of the actuator 108. Therefore, in some examples, only enough space for the stem 128 is needed to operate the plug 106 in the passageway 110. Thus, in some examples, the third axis 168 is only offset from the first and/or second axes 164, 166 by a distance of about half of the diameter of the passageway 110 at the valve seat 130.

In the example shown, the first valve body portion 102, the second valve body portion 104 and/or the flow control member 106 may be made of any suitable material such as, for example, cast iron, carbon steel, corrosion resistant materials such as, for example, stainless steel, high nickel steel, etc., and/or any other suitable material(s), or a combination thereof. In some examples, the valve 100 may not include a second valve body portion 104 such as, for example, when the upstream supply pipe and the downstream supply pipe are offset from one another. In such examples, the inlet 112 is coupled to the upstream supply pipe and the outlet of the first valve body portion (e.g., adjacent the second flange 118) is coupled directly to the downstream supply pipe. The valve seat 130 may be coupled between the second flange 118 and a flange of the downstream supply pipe (or upstream supply pipe if reversed). Also, in some examples, the first, second and/or third axes 164, 166, 168 may be skew (i.e., neither parallel nor intersecting) to one another.

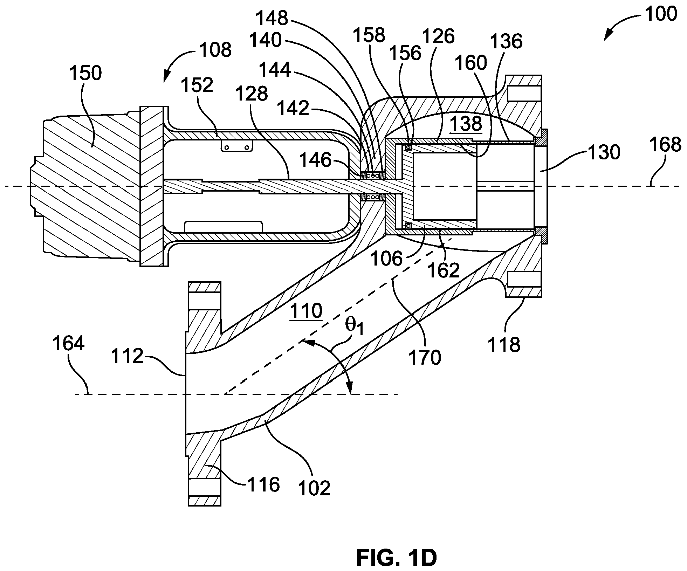

As mentioned above, in some examples, the inlet and the outlet of the valve 100 may be parallel but offset (e.g., distanced or spaced apart from one another, non-coaxial), depending on the orientation and location of an upstream supply pipe and a downstream supply pipe. In some such examples, as illustrated in FIG. 1D (where reference numbers from FIGS. 1A-1C are used to indicate elements that are similar or identical to those of FIGS. 1A-1C), the second valve body portion 104 (FIGS. 1A-1C) may not be utilized at all. As shown in FIG. 1D, the outlet of the valve 100 is at the outlet of the first valve body portion 102 and, thus, is substantially aligned along the third axis 168. In this example, the second flange 118 of the first valve body portion 102 may be coupled directly to a downstream supply pipe. In some examples, the valve seat 130 may be coupled between the second flange 118 of the first valve body portion 102 and a flange of the downstream supply pipe. The first axis 164 and the third axis 168 (e.g., the outlet of the valve 100 in this example) may be offset by any amount to substantially align the valve 100 with the upstream supply pipe and the downstream supply pipe.

In an example operation, fluid enters the first valve body portion 102 at the inlet 112, via an upstream supply pipe, and flows in a first direction substantially aligned along the first axis 164. The flow of fluid changes direction (e.g., formed by the first angle θ₁) and flows along the fourth axis 170 in the first valve body portion 102. As the fluid approaches the cage 126, the plug 106 and the valve seat 130, the first valve body portion 102 curves to change the flow of fluid to a second direction along the third axis 168. When the valve 100 is in the first (open) position, fluid flows through the openings 136 in the cage, through the valve seat 130 and out the valve 100 into a downstream supply pipe. In some examples, the first and second directions may be substantially the same. The example valve 100 shown in FIG. 1D has a reduced face-to-face length and a reduced number of parts.

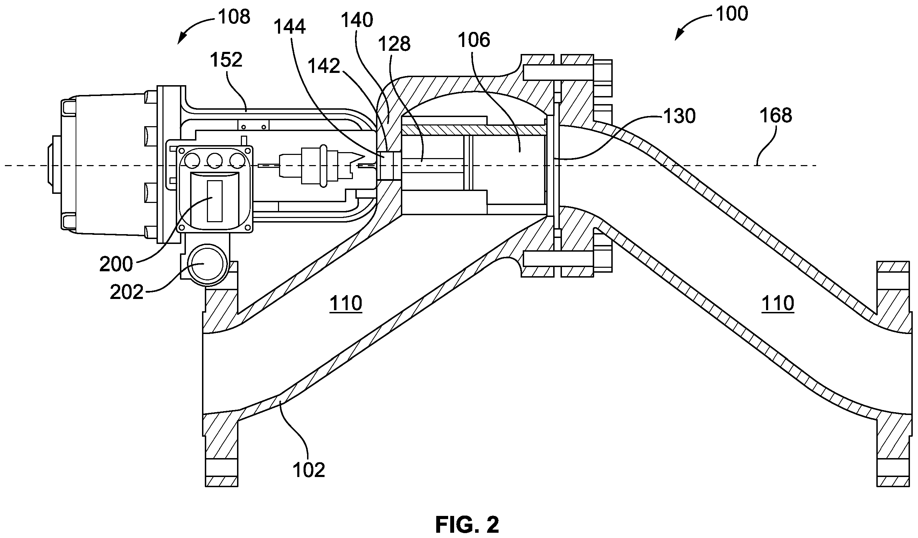

FIG. 2 illustrates a partially cross-sectioned view of the valve 100 with a sensor module 200 for determining the location of the stem 128 and, thus, the flow control member 106 within the passageway 110 of the valve 100. After extensive and repeated use, as commonly seen in known valves, general wear may loosen the sealing interface between the stem 128 and the packing 144 in the aperture 140. Therefore, in some examples, the stem 128 may shift slightly within the aperture 142 in the first valve body portion 102 and become misaligned from the third axis 168. Additionally, in some examples, the interface between the support 152 of the actuator 108 and the wall section 140 of the first valve body portion 102 may loosen and further shift the alignment of the stem 128 with respect to the first valve body portion 102. These shifts may cause the plug 106 to become misaligned relative to the valve seat 130 and the third axis 168 and, as a result, negatively affect operation of the valve 100.

In the example shown, the sensor module 200 is coupled to the first valve body portion 102. A connector 202 maintains the sensor module 200 in a predetermined location with respect to the first valve body portion 102. In this example, the sensor module 200 is to sense the location of the stem 128 and provide a feedback signal to the actuator 108 to more accurately control the location of the flow control member 106 in the valve 100. The feedback signal instantaneously accounts for changes (e.g., play, backlash, slop) in the alignment of the stem 128 and, thus, the plug 106. In some examples, the sensor module 200 includes additional instruments/devices to adjust the position of the stem 128 to account for these changes in the position of the stem 128. In other examples, the sensor module 200 may be coupled to the stem 128 and/or the support 152 to measure the location of the stem 128 relative to the first valve body portion 102.

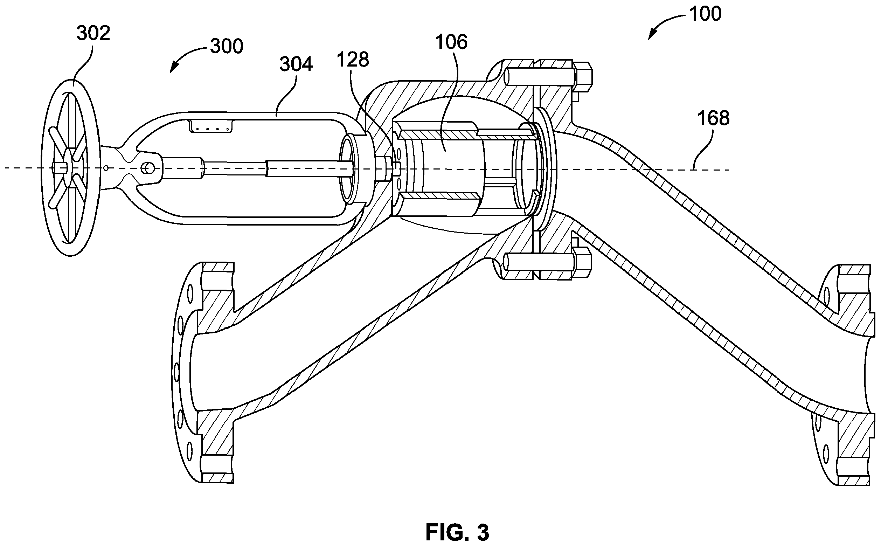

FIG. 3 illustrates a partially cross-sectioned view of the valve 100 with an alternative drive mechanism 300 having a hand wheel 302 and a mounting/alignment support 304. The hand wheel actuator 302 allows an operator or technician to manually operate (e.g., open and close) the valve 100 by rotating the hand wheel 302. In some examples, the drive device 300 includes an assembly of sleeves and threaded rods to move the stem 128 as the hand wheel 302 is rotated. The hand wheel actuator operates 302 operates to move the plug 106 along the third axis 168 to open and close the valve 100.

The example axial fluid control valve 100 described herein advantageously reduces the number of actuating components, which require extensive seals and gaskets, and increases flow efficiency. The example axial fluid control valve 100 also reduces unwanted leakage because the actuation components are disposed outside the pressure boundary of the fluid stream. Additionally, the example axial fluid control valve 100 includes significantly fewer moving parts, which greatly reduce the costs of manufacturing and maintenance and reduces the weight of the valve. The example valve described herein also includes a passageway having minimal curves and turns to provide a less restrictive flow path through the valve.

Although certain example apparatus have been described herein, the scope of coverage of this patent is not limited thereto. On the contrary, this patent covers all methods, apparatus, and articles of manufacture fairly falling within the scope of the appended claims.

## Claims

1. An apparatus comprising:
- a valve body defining a passageway (110) between an inlet (112) and an outlet (114), the inlet (112) being aligned along a first axis (164) and the outlet (114) being aligned along a second axis (166), the valve body including a first valve body portion (102) having a cavity (138) defined by a wall section (140) of the first valve body portion (102) and a second valve body portion (104) coupled to the first valve body portion (102) to form the passageway (110) that provides a fluid flow path between the inlet (112) and the outlet (114) when the apparatus is installed in a fluid process system;
- a flow control member (106) interposed between the inlet and the outlet, the flow control member including a plug;
- an actuator (108) having a stem (128) coupled to the flow control member (106) to move the flow control member (106) along a third axis (168) in the passageway (110), the apparatus being **characterised in that** the third axis (168) is substantially parallel to and offset from at least one of the first axis (164) or the second axis (166); and
- a cage (126) is disposed within the cavity (138), the cage being coupled to an inner surface of the first valve body portion (102) and having a longitudinal axis aligned along the third axis (168) in the passageway (110);
wherein the flow control member (106) is slidably disposed within the cage (126) and moves between an open position and closed position to control the flow of fluid through the valve body between the inlet (112) and the outlet (114).

2. The apparatus of claim 1, wherein the first axis (164) and the second axis (166) are substantially the same.

3. The apparatus of any of the preceding claims further comprising a valve seat (130) interposed between the inlet (112) and the outlet (114), wherein a portion of the passageway (110) adjacent the valve seat (130) is aligned with the third axis (168).

4. The apparatus of any of the preceding claims, wherein a plane along which the valve seat (130) is oriented is substantially perpendicular to at least one of the first axis (164) or the second axis (166).

5. The apparatus of any of the preceding claims further comprising a sensor (200) coupled to the valve body or the stem (128) to determine a location of the stem (128) relative to the valve body, the sensor (200) is to communicate the location of the stem (128) to the actuator (108).

6. The apparatus of any of the preceding claims, wherein the valve body comprises an aperture (142) to receive the stem (128) and is substantially aligned along the third axis.

7. The apparatus of any of the preceding claims, wherein the stem (128) has a longitudinal axis oriented along the third axis (168).

8. The apparatus of any of the preceding claims, wherein the third axis (168) is spaced apart from the first axis (164) by a distance greater than about a radius of the passageway (110).

9. The apparatus of claim 1, wherein
the inlet (112) being adjacent a first portion of the passageway (110) having a first fluid flow path at the inlet in a first direction, the outlet (114) being adjacent a second portion of the passageway (110) having a second fluid flow path at the outlet in a second direction substantially the same as the first direction; and
the plug (106) movable within a third portion of the passageway (110) having a third fluid flow path in a third direction substantially the same as the first direction of the first fluid flow path at the inlet and the second direction of the second fluid flow path at the outlet,
wherein the valve body has a first curved or angled portion between the first portion of the passageway (110) and the third portion of the passageway (110). [0035]

10. The apparatus of claim 9 further comprising a hand wheel (302) to manually move the plug (106) within the third portion of the passageway (110).

11. The apparatus of claim 9, wherein the actuator (108) having the stem (128) coupled to the plug (106), moves the plug (106) within the third portion of the passageway (110), and wherein the actuator (108) is to move the stem (128) in the third direction.

12. The apparatus of claim 9, wherein the actuator (108) is coupled to an outer surface of the valve body.

13. The apparatus of claim 9, wherein the valve body further comprises a second curved or angled portion between the third portion of the passageway (110) and the second portion of the passageway (110), wherein the second curved or angled portion of the passageway has a substantially constant diameter.

14. An apparatus according to claim 1 comprising:
the valve body having the flow passage including the inlet, the outlet and a flow control aperture, wherein a fluid is to flow through the inlet, the outlet and the aperture in substantially the same direction, and wherein at least a portion of a central axis of the flow passage is non-linear; and
the flow control member to move along a direction of a fluid flowing through the aperture to control the fluid flow through the valve body.

## Patentansprüche

1. Eine Vorrichtung, umfassend:
- einen Ventilkörper, der einen Durchgang (110) zwischen einem Einlass (112) und einem Auslass (114) definiert, wobei der Einlass (112) entlang einer ersten Achse (164) ausgerichtet ist und der Auslass (114) entlang einer zweiten Achse (166) ausgerichtet ist, wobei der Ventilkörper einen ersten Ventilkörperteil (102) mit einer Vertiefung (138), die durch einen Wandabschnitt (140) des ersten Ventilkörperteils (102) definiert ist, und einen zweiten Ventilkörperteil (104), der an den ersten Ventilkörperteil (102) gekoppelt ist, umfasst, um diesen Durchgang (110) zu bilden, der einen Fluidströmungsweg zwischen dem Einlass (112) und dem Auslass (114) bildet, wenn die Vorrichtung sich in einem Fluidprozesssystem befindet;
- ein Strömungssteuerelement (106), das zwischen dem Einlass und dem Auslass angeordnet ist, wobei das Strömungssteuerelement einen Stecker umfasst;
- einen Stellantrieb (108) mit einem Schaft (128), der an das Strömungssteuerelement (106) gekoppelt ist, um das Strömungssteuerelement (106) entlang einer dritten Achse (168) im Durchgang (110) zu bewegen, wobei die Vorrichtung **dadurch gekennzeichnet ist, dass** die dritte Achse (168) im Wesentlichen parallel und versetzt zu mindestens entweder der ersten Achse (164) oder der zweiten Achse (166) liegt; und
- einen Käfig (126), der innerhalb der Vertiefung (138) untergebracht ist, wobei der Käfig mit einer Innenfläche des ersten Ventilkörperteils (102) verkoppelt ist und eine Längsachse, die entlang der dritten Achse (168) im Durchgang (110) ausgerichtet ist, aufweist;
wobei das Strömungssteuerelement (106) innerhalb des Käfigs (126) verschiebbar angeordnet ist und sich zwischen einer offenen und einer geschlossenen Position bewegt, um den Fluidstrom durch den Ventilkörper zwischen dem Einlass (112) dem Auslass (114) zu kontrollieren.

2. Vorrichtung gemäß Anspruch 1, wobei die erste Achse (164) und die zweite Achse (166) im Wesentlichen übereinstimmen.

3. Vorrichtung gemäß einem der vorstehenden Ansprüche, die weiterhin einen Ventilsitz (130) umfasst, der zwischen dem Einlass (112) und dem Auslass (114) montiert ist, wobei ein Abschnitt des Durchgangs (110), neben dem Ventilsitz (130) an der dritten Achse (168) ausgerichtet ist.

4. Vorrichtung gemäß einem der vorstehenden Ansprüche, wobei eine Ebene, entlang derer der Ventilsitz (130) ausgerichtet ist, sich im Wesentlichen senkrecht zu mindestens entweder der ersten Achse (164) oder der zweiten Achse (166) befindet.

5. Vorrichtung gemäß einem der vorstehenden Ansprüche, die weiterhin einen Sensor (200) umfasst, der an den Ventilkörper oder den Schaft (128) gekoppelt ist, um eine Position des Schaftes (128) relativ zum Ventilkörper zu bestimmen, wobei der Sensor (200) dazu dient, die Position des Schaftes (128) an den Stellantrieb (108) zu übermitteln.

6. Vorrichtung gemäß einem der vorstehenden Ansprüche, wobei der Ventilkörper eine Öffnung (142) zur Aufnahme des Schaftes (128) enthält, und im Wesentlichen entlang der dritten Achse ausgerichtet ist.

7. Vorrichtung gemäß einem der vorstehenden Ansprüche, wobei der Schaft (128) eine Längsachse, die entlang der dritten Achse (168) ausgerichtet ist, hat.

8. Vorrichtung gemäß einem der vorstehenden Ansprüche, bei der die dritte Achse (168) und die erste Achse (164) voneinander um einen Abstand beabstandet sind, der größer ist als ungefähr der Radius des Durchgangs (110).

9. Vorrichtung gemäß Anspruch 1 wobei
der Einlass (112), der neben einem ersten Abschnitt des Durchgangs (110) liegt, einen ersten Fluidströmungsweg am Einlass in eine erste Richtung hat, wobei der Auslass (114), der neben einem zweiten Abschnitt des Durchgangs (110) liegt, einen zweiten Fluidströmungsweg am Auslass in eine zweite Richtung hat, die im Wesentlichen dieselbe wie die erste Richtung ist; und
der Stecker (106), der beweglich innerhalb eines dritten Abschnitts des Durchgangs (110) ist, einen dritten Fluidströmungsweg in eine dritte Richtung hat, die im Wesentlichen dieselbe wie die erste Richtung des ersten Fluidströmungswegs am Einlass und die zweite Richtung des zweiten Fluidströmungswegs am Auslass ist,
wobei der Ventilkörper einen ersten gekrümmten oder abgewinkelten Abschnitt, zwischen dem ersten Abschnitt des Durchgangs (110) und dem dritten Abschnitt des Durchgangs (110) hat.

10. Vorrichtung gemäß Anspruch 9, die weiterhin ein Handrad (302) umfasst, um den Stecker (106) manuell innerhalb des dritten Abschnitts des Durchgangs (110) zu betätigen.

11. Vorrichtung gemäß Anspruch 9, wobei der Stellantrieb (108), dessen Schaft (128) mit dem Stecker (106) verbunden ist, den Stecker (106) innerhalb des dritten Abschnitts des Durchgangs (110) bewegt, und wobei der Stellantrieb (108) den Schaft (128) in die dritte Richtung bewegt.

12. Vorrichtung gemäß Anspruch 9, wobei der Stellantrieb (108) mit einer Außenfläche des Ventilkörpers gekoppelt ist.

13. Vorrichtung gemäß Anspruch 9, wobei der Ventilkörper einen zweiten gekrümmten oder abgewinkelten Abschnitt zwischen dem dritten Abschnitt des Durchgangs (110) und dem zweiten Abschnitt des Durchgangs (110) hat, wobei der zweite gekrümmte oder abgewinkelte Abschnitt des Durchgangs einen im Wesentlichen konstanten Durchmesser hat.

14. Vorrichtung gemäß Anspruch 1, umfassend:
den Ventilkörper, bei dem der Strömungsdurchgang den Einlass, den Auslass und eine Strömungskontrollöffnung umfasst, in dem ein Fluid durch den Einlass, den Auslass und die Öffnung in im Wesentlichen derselben Richtung strömen soll und wobei mindestens ein Abschnitt der zentralen Achse des Strömungsdurchgangs nicht linear ist; und
das Strömungskontrollelement sich entlang einer Richtung eines Fluids, das durch die Öffnung fließt, bewegen soll, um den Fluidstrom durch den Ventilkörper zu steuern.

## Revendications

1. Appareil comprenant :
- un corps de vanne définissant un passage (110) entre un orifice d'entrée (112) et un orifice de sortie (114), l'orifice d'entrée (112) étant alignée le long d'un premier axe (164) et l'orifice de sortie (114) étant aligné sur un deuxième axe (166), le corps de vanne incluant une première partie (102) de corps de vanne ayant une cavité (138) définie par une section de paroi (140) de la première partie (102) de corps de vanne et une deuxième partie (104) de corps de vanne accouplée à la première partie (102) de corps de vanne pour former le passage (110) qui crée un chemin d'écoulement de fluide entre l'orifice d'entrée (112) et l'orifice de sortie (114) quand l'appareil est installé dans un système de traitement de fluide ;
- un élément de régulation d'écoulement (106) intercalé entre l'orifice d'entrée et l'orifice de sortie, l'élément de régulation d'écoulement comprenant un obturateur ;
- un actionneur (108) ayant une tige (128) accouplée à l'élément de régulation d'écoulement (106) pour déplacer l'élément de régulation d'écoulement (106) le long d'un troisième axe (168) dans le passage (110), l'appareil étant **caractérisé en ce que** le troisième axe (168) est sensiblement parallèle à au moins un parmi le premier axe (164) ou le deuxième axe (166) et décalé par rapport à celui-ci ; et
- une cage (126) est disposée dans la cavité (138), la cage étant accouplée à une surface intérieure de la première partie (102) de corps de vanne et ayant un axe longitudinal aligné le long du troisième axe (168) dans le passage (110) ;
dans lequel l'élément de régulation d'écoulement (106) est disposé de manière coulissante dans la cage (126) et se déplace entre une position ouverte et une position fermée pour réguler l'écoulement de fluide à travers le corps de vanne entre l'orifice d'entrée (112) et l'orifice de sortie (114).

2. Appareil selon la revendication 1, dans lequel le premier axe (164) et le deuxième axe (166) sont sensiblement les mêmes.

3. Appareil selon l'une quelconque des revendications précédentes comprenant en outre un siège (130) de vanne intercalé entre l'orifice d'entrée (112) et l'orifice de sortie (114), dans lequel une partie du passage (110) adjacente au siège (130) de vanne est alignée sur le troisième axe (168).

4. Appareil selon l'une quelconque des revendications précédentes, dans lequel un plan le long duquel est orienté le siège (130) de clapet est sensiblement perpendiculaire à au moins un parmi le premier axe (164) ou le deuxième axe (166).

5. Appareil selon l'une quelconque des revendications précédentes comprenant en outre un capteur (200) accouplé au corps de vanne ou à la tige (128) pour déterminer un emplacement de la tige (128) par rapport au corps de vanne, le capteur (200) servant à communiquer l'emplacement de la tige (128) à l'actionneur (108).

6. Appareil selon l'une quelconque des revendications précédentes, dans lequel le corps de vanne comprend une ouverture (142) pour recevoir la tige (128) et est sensiblement aligné le long du troisième axe.

7. Appareil selon l'une quelconque des revendications précédentes, dans lequel la tige (128) a un axe longitudinal orienté le long du troisième axe (168).

8. Appareil selon l'une quelconque des revendications précédentes, dans lequel le troisième axe (168) est espacé du premier axe (164) d'une distance supérieure à environ un rayon du passage (110).

9. Appareil selon la revendication 1, dans lequel
l'orifice d'entrée (112) est adjacent à une première partie du passage (110) ayant un premier chemin d'écoulement de fluide au niveau de l'orifice d'entrée dans une première direction, l'orifice de sortie (114) étant adjacent à une deuxième partie du passage (110) ayant un deuxième chemin d'écoulement de fluide au niveau de l'orifice de sortie dans une deuxième direction sensiblement identique à la première direction ; et
l'obturateur (106) est mobile dans une troisième partie du passage (110) ayant un troisième chemin d'écoulement de fluide dans une troisième direction sensiblement identique à la première direction du premier chemin d'écoulement de fluide au niveau de l'orifice d'entrée et à la deuxième direction du deuxième chemin d'écoulement de fluide au niveau de l'orifice de sortie,
dans lequel le corps de vanne a une première partie incurvée ou inclinée entre la première partie du passage (110) et la troisième partie du passage (110). [0035]

10. Appareil selon la revendication 9 comprenant en outre un volant (302) pour déplacer manuellement l'obturateur (106) dans la troisième partie du passage (110).

11. Appareil selon la revendication 9, dans lequel l'actionneur (108) ayant la tige (128) accouplée à l'obturateur (106), déplace l'obturateur (106) dans la troisième partie du passage (110), et dans lequel l'actionneur (108) sert à déplacer la tige (128) dans la troisième direction.

12. Appareil selon la revendication 9, dans lequel l'actionneur (108) est accouplé à une surface extérieure du corps de vanne.

13. Appareil selon la revendication 9, dans lequel le corps de vanne comprend en outre une deuxième partie incurvée ou inclinée entre la troisième partie du passage (110) et la deuxième partie du passage (110), dans lequel la deuxième partie incurvée ou inclinée du passage a un diamètre sensiblement constant.

14. Appareil selon la revendication 1 comprenant :
le corps de vanne ayant le passage d'écoulement incluant l'orifice d'entrée, l'orifice de sortie et une ouverture de régulation d'écoulement, dans lequel un fluide doit s'écouler à travers l'orifice d'entrée, l'orifice de sortie et l'ouverture sensiblement dans la même direction, et dans lequel au moins une partie d'un axe central du passage d'écoulement est non linéaire ; et
l'élément de régulation d'écoulement pour se déplacer le long d'une direction d'un fluide s'écoulant à travers l'ouverture afin de réguler l'écoulement de fluide à travers le corps de vanne.
